Europäisches Patentamt

European Patent Office

Office européen des brevets

(19)

(11) Veröffentlichungsnummer: **0 169 255**
**B1**

(12) **EUROPÄISCHE PATENTSCHRIFT**

(45) Veröffentlichungstag der Patentschrift:
16.08.89

(21) Anmeldenummer: 84108647.3

(22) Anmeldetag: 21.07.84

(51) Int. Cl.⁴: **B 60 C 25/07**

(54) Aufspannbacke zum Aufspannen eines Kraftfahrzeugrades auf ein Reifenmontiergerät.

(43) Veröffentlichungstag der Anmeldung:
29.01.86 Patentblatt 86/5

(45) Bekanntmachung des Hinweises auf die Patenterteilung:
16.08.89 Patentblatt 89/33

(84) Benannte Vertragsstaaten:
BE CH DE FR IT LI

(56) Entgegenhaltungen:
EP-A- 0 008 822
FR-A- 2 137 736
FR-A- 2 347 217
US-A- 2 027 626
US-A- 2 351 355

Prospekt "PNEUMONT", Schenk Auto-Service-Geräte
GmbH, 1983

(73) Patentinhaber: Schenck Auto-Service-Geräte GmbH,
Landwehrstrasse 63 Postfach 4129, D-6100 Darmstadt
(DE)

(72) Erfinder: Maus, Otfrid Ing.-grad., im Fiedlersee 34,
D-6100 Darmstadt (DE)
Erfinder: Welden, Michael Ing.-grad., Berliner
Strasse 14, D-6101 Messel (DE)
Erfinder: Bünau, Peter, Gartenstrasse 8,
D-6147 Lautertal 2/Gadernheim (DE)

(74) Vertreter: Dallhammer, Herbert, Dipl.-Ing., c/o
Schenck-Auto-Service-Geräte GmbH Patentabteilung
Postfach 4129 Landwehrstrasse 63, D-6100 Darmstadt
(DE)

ACTORUM AG

## Beschreibung

Die Erfindung betrifft eine Aufspannbacke für ein Reifenmontiergerät mit einem Gegenlager, einer nach außen kontinuierlich ansteigenden Fläche und einem Aufspanntisch für ein Felgenhorn, einer Felge eines Kraftfahrzeugrades, auf die ein Reifen montiert werden soll oder demontiert werden soll und einer Halterung für die Aufspannbacke.

Durch den Prospekt «Pneumont» der Firma Schenk ASG (vom August 1983) ist eine Reifenmontiermaschine bekannt geworden, bei der auf einer Scheibe über Schlitzführungen nach innen bewegliche Aufspannbacken vorgesehen sind, die die Felge eines zu montierenden oder zu demontierenden Kraftfahrzeugrades an dessen Felgenhorn mittels dieser Spannbacken wird es möglich, mit einem vertikal angeordneten Reifenmontiergerät zwischen das andere Felgenhorn und den zu montierenden oder demontierenden Reifen zu gelangen. Zur Montage oder Demontage wird nunmehr die Scheibe mit dem an der Felge festgespannten Rad in Rotation versetzt und der Felgenwulst des Reifens bei der Montage entweder unter das andere Felgenhorn gebracht oder bei der Demontage aus dem Felgenhorn herausgehoben.

Befinden sich nunmehr an der Kraftfahrzeugfelge Bauteile, die über die Ebene des jeweiligen Felgenhornes oder über ein Felgenhorn hinausragen, beispielsweise Vorbauten zur Verkleinerung der Achsstummels oder bei Motorradfelgen angeordnete Bremsscheiben wird ein Aufspannen zur Montage und Demontage der Reifen derartiger Kraftfahrzeugräder nur schwer möglich sein. Um diesem abzuhelfen, wurden anstelle der Aufspannbacken Hilfskonstruktionen verwendet, wobei geschweißte Sockel die Aufspannbacken tragen, um eine bestimmte Höhe der Aufspannbacken über der Scheibe zu erreichen. Diese Ersatzkonstruktionen sind jedoch labil und führen darüber hinaus zufolge ihrer Labilität bei der Montage oder Demontage zur Beschädigung der aufzuziehenden Reifen oder zur Beschädigung von Felgen, insbesondere wenn es sich um Leichtmetallfelgen handelt. Darüber hinaus stellen diese Hilfskonstruktionen dann Hindernisse dar, wenn zur Montage die eine Reifenseite in das Tiefbett der Felge gedrückt werden soll, da der Aufspannbacken über diese in radialer Richtung hinausragen und somit ein Kippen des Reifens um das eingespannte Felgenhorn verhindert.

Durch die US-A 23 51 355 ist eine Aufspannbacke der eingangs genannten Art bekannt geworden. Die dort offenbarte nach außen kontinuierlich ansteigende Fläche und das Gegenlager lassen ein gezieltes Einführen des Felgenhorns in das Gegenlager nicht zu. Das Gegenlager muß nach dem größten Felgenhorn ausgebildet werden. Damit ist die Gefahr gegeben, daß kleine Felgenhörner ungleichförmig vom Gegenlager erfaßt werden, insbesondere bei Fahrzeugfelgen mit Anbauten, und ein Schrägstellen der Felge im aufgespannten Zustand verursachen.

Ausgehend hiervon liegt der Erfindung die Aufgabe zugrunde, eine Aufspannbacke zum Aufspannen eines Kraftfahrzeugrades auf ein Reifenmontiergerät in Vorschlag zu bringen, bei der unabhängig von der Felgenkonstruktion, dem Felgenmaterial und unabhängig von an der Radschüssel angebrachten weiteren Bauteilen, eine störungsfreie Montage oder Demontage durchgeführt wird. Diese Aufgabe wird erfindungsgemäß mit den kennzeichnenden Merkmalen des Anspruchs 1 gelöst. Durch Vorsehen einer Ausnehmung zwischen Zentrierstift und Halteschraube kann diese Aufspannbacke auch auf bisherigen Reifenmontiergeräten verwendet werden, ohne daß die dort angeordneten Aufspannbacken entfernt werden müssen. Durch die Ausgestaltung dieser Aufspannbacke als nach außen kontinuierlich ansteigende Fläche und die Anordnung eines Gegenlagers ohne Übergang an derem radialen äußeren Ende, wird beim Spannen der Felge ein Aufgleiten und ein gezieltes Einführen des Felgenhorns in das Gegenlager erreicht und es wird kein zusätzlicher Druck oder Zwang auf andere Konstruktionsteile als das Felgenhorn ausgeübt und es wird gleichzeitig beim Entspannen nach einer Montage oder Demontage ein sicheres Lösen des Gegenlagers vom Felgenhorn und ein Ablegen der Felge mit oder ohne Reifen erreicht. Die kontinuierlich nach außen ansteigende Fläche kann gegenüber der Horizontalebene verschiedene Steigungen besitzen. Auch kann unabhängig von der Flankensteifigkeit jeder Reifen in das Bett der Felge eingedrückt werden, ohne daß eine Behinderung durch die Gegenlager auftritt. In Anspruch 2 ist eine besonders geeignete Ausgestaltung der nach außen kontinuierlich ansteigenden Fläche unter Schutz gestellt, eine schiefe Ebene.

Die kennzeichnenden Merkmale des Anspruchs 3 stellen Gleithilfen für das Aufgleiten der Felge während des Spannvorgangs auf der nach außen ansteigenden kontinuierlichen Fläche dar. Als Gleithilfen können Werkstoffe wie Gummi, abriebfeste Kunststoffe oder Metalle mit geringem Gleitwiderstand, die jedoch beim Aufgleiten nicht verschmieren, verwendet werden. Das kennzeichnende Merkmal des Anspruchs 3 stellt die einstückige Herstellung einer erfindungsgemäßen Aufspannbacke unter Schutz, wobei die Einstückigkeit durch Guß oder mittels Brennschneiden aus Blech erreicht werden kann, auch ist ein Herstellen aus Kunststoff wie Nylon oder glasfaserverstärktem Kunststoff, der beispielsweise gespritzt wird, denkbar.

Die Einstückigkeit der einzelnen Spannbacke kann gemäß Anspruch 5 auch durch Schweißen erfolgen.

Eine noch weitere Ausgestaltung der erfindungsgemäßen Aufspannbacke wird mit den kennzeichnenden Merkmalen des Anspruchs 6 unter Schutz gestellt. Durch die schwalbenschwanzförmige Ausgestaltung der Fußebene läßt sich auch beim Festspannen einer Felge ein sicheres Gleiten innerhalb des Aufspanntisches ohne erhöhte Reibung durchführen.

Anspruch 7 stellt die Verwendung mehrerer erfindungsgemäßen Aufspannbacken unter Schutz, wobei anstelle der dort offenbarten drei erfindungsgemäßen Aufspannbacken auch vier oder noch mehrere, je nach Größe des zu montierenden oder demontierenden Reifens, auf eine Felge treffen. Die im Aufspanntisch angeordneten Schlitzführungen gemäß Anspruch 7 sind besonders geeignet für Auf-

spannbacken, deren Fußebene schwalbenschwanzförmig ausgebildet ist.

In der nachfolgenden Zeichnung wird die Erfindung näher erläutert. Es zeigen:

Figur 1 zur Erläuterung des erfindungsgemäßen Verfahrens in schematischer Darstellung einen Aufspanntisch mit erfindungsgemäßen Aufspannbacken und einer aufzunehmenden Felge;

Figur 2 eine erfindungsgemäße Aufspannbacke;

Figur 3 einen Schnitt durch die Aufspannbacke gemäß Figur 2 zur Darstellung der schwalbenschwanzförmigen Ausbildung des Fußteils im Zusammenwirken mit einem Aufspanntisch;

Figur 4 eine Ausgestaltung einer nach außen kontinuierlich ansteigenden Fläche im Bereich des Gegenlagers, die mit einer zusätzlichen Gleitschicht versehen ist.

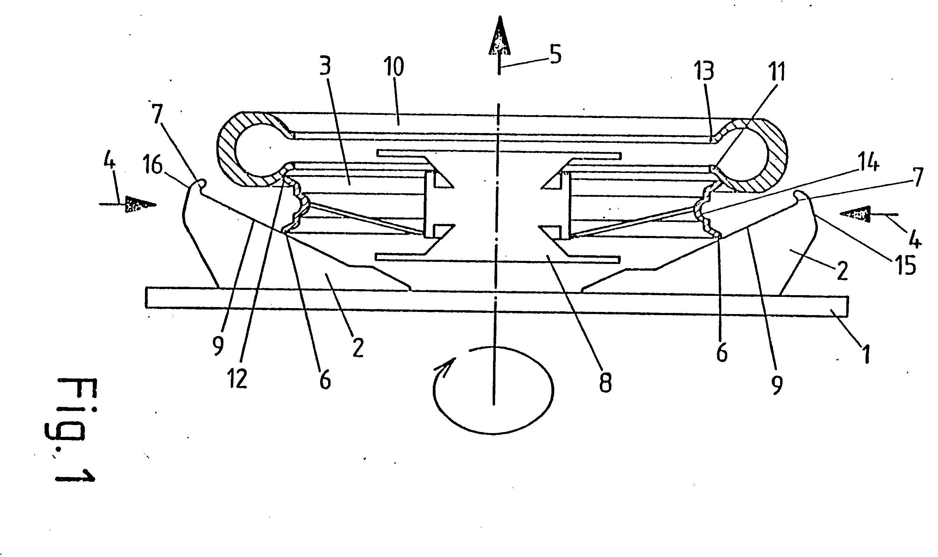

Ein mit einem nicht dargestellten Reifenmontiergerät verbundener Aufspanntisch 1 (vergleiche Figur 1) kann mittels Antriebsmotor in Rotation versetzt werden. Auf diesem Aufspanntisch 1 sind im einfachsten Falle Aufspannbacken 2 angeordnet, die gemäß nach innen gerichteten Pfeilen 4 auf eine auf dem Aufspanntisch 1 liegenden Felge 3 zubewegt werden können. Zufolge der Bewegung der Aufspannbacken 2 in Richtung der nach innen gerichteten Pfeile 4 wird die Felge 3 selbst entsprechend dem senkrechten Pfeil 5 nach oben angehoben, bis ein Felgenhorn 6 im Gegenlager 7 der Aufspannbacken 2 fest arretiert wird.

Damit werden zusätzliche Bauteile 8 sicher frei vom Aufspanntisch 1 sein und erhalten auch keinen Zwang durch die Aufspannbacken 2, da die Aufspannbacken 2 mit ihrer als Gleichtfläche wirkenden dem Rad zugewandten Seite 9 ein Freihängen der zusätzlichen Bauteile 8 sicher gewährleisten. Nach fester Verankerung der Felge 3 in den Gegenlagern – im allgemeinen werden vier Aufspannbacken 2 mit vier Gegenlagern 7 verwendet – beginnt beispielsweise die Montage dergestalt, daß ein Reifen 10 auf die Felge 3 aufgelegt wird, der untere Wulst 11 über das obere Felgenhorn 12 geschoben wird und bei einer Rotation des Aufspanntisches 1 mit einem nicht dargestellten Montierwerkzeug insagesamt über das obere Felgenhorn 12 gezogen wird.

Zur Montage des oberen Wulstes 13 ist es erforderlich, diesen auf der dem Montierkopf entgegengesetzten Seite teilweise in das Tiefbett 14 der Felge 3 zu drücken. Dies kann zufolge der radialen Außenseite 15 der Aufspannbacken 2 zufolge deren abgerundeter Form 16 im oberen Bereich erfindungsgemäß sehr leicht erfolgen. Diese abgerundete Form ist praktisch ein Gegenlager, welches den Reifen 10 bei vertikalem Druck von oben mit seinem unteren Wulst 11 zwangsläufig in das Tiefbett 14 führt. Nachdem der Reifen 10 so weit vorbereitet ist, wird bei weiterer Rotation des Aufspanntisches 1 auch der obere Wulst 13 über das obere Felgenhorn 12 mit Hilfe eines Montiergeräts geführt und die Montage eines Reifens 10 auf die Felge 3 ist somit beendet. Die Demontage geschieht in entgegengesetzter Reihenfolge.

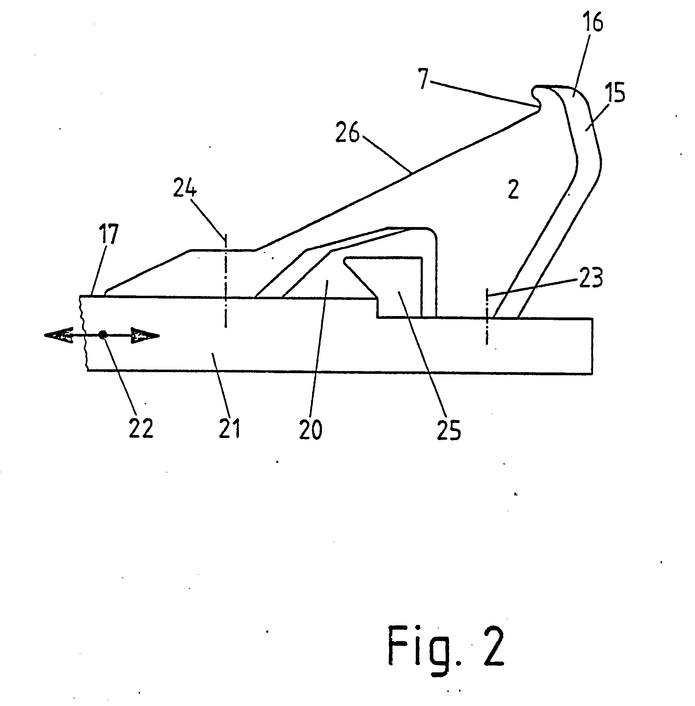

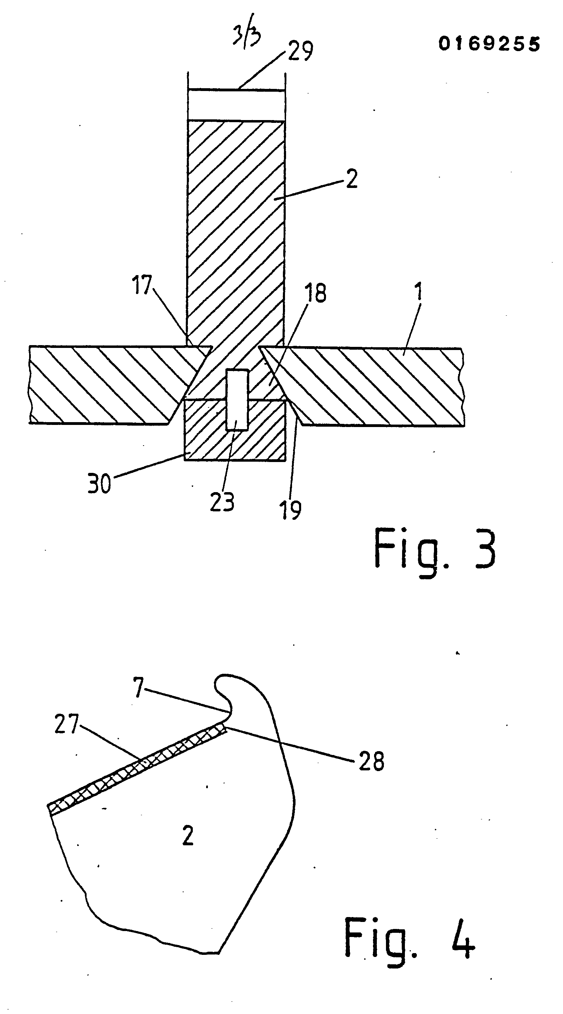

In Figur 2 ist eine Aufspannbacke 2 in größerem Maßstab dargestellt. Eine sich in einer Horizontalfläche erstreckende Fußebene 17, die gemäß Figur 3 mittels Schwalbenschwanz 18 in einem entsprechenden Schlitz 19 des Aufspanntisches 1 geführt ist besitzt in ihrem mittleren Bereich eine Aussparung 20. in der eine bereits auf dem Aufspanntisch 1 befindliche Aufspannbacke Platz finden kann.

Gemäß Figur 2 ist die Aufspannbacke 2 auf einem Träger 21 befestigt, der gemäß Doppelpfeil 22 in Richtung auf die nicht dargestellte Felge zubewegt. oder von dieser wegbewegt werden kann. In diesem Falle wird ein Stift 23 die Aufspannbacke 2 auf dem Träger 21 justieren, während eine Schraube 24 die Aufspannbacke 2 am vorderen Teil der Trägers 21 arretiert. Zwischen Schraube 24 und Stift 23 befindet sich nunmehr die Aussparung 20, in der eine bereits auf dem Träger befindliche weitere Aufspannbacke Platz findet, die ebenfalls auf dem Träger 21 mittels Verschraubung fest angeordnet ist und die zur Halterung von Felgen dient, bei welchen keine über die Ebene des jeweiligen Felgenhorns hinausragende Erhebung der Felge oder eines Bauteils vorhanden ist.

Insoweit ist es gemäß der Erfindung möglich, ein Reifenmontiergerät in seiner Anwendung universeller einzusetzen.

Es wird jedoch darauf hingewiesen, daß die erfindungsgemäße Aufspannbacke 2 auch für Felgen geeignet ist, die bisher mit der Hilfe der weiteren Aufspannbacke 25 festgehalten wurde. Die erfindungsgemäße Aufspannbacke 2 ist in soweit wesentlich besser geeignet auch für sogenannte Felgen. bei denen kein Überstand über das Felgenhorn vorhanden ist, da zufolge einer nach außen kontinuierlich ansteigenden Fläche 26 eine Felge nur an einem geringen Teil ihres Umfanges linienberührend aufgleitet bis zum Gegenlager 7, im Gegensatz zu der bisherigen Anordnung. Bei dieser werden die Träger 21 unter der auf dem Aufspanntisch liegenden Felge hindurch bewegt, was zu einem Verschleiß sowohl am Träger 21 als auch an der Felge führen kann. Darüber hinaus ist auch wie oben in Figur 1 näher beschrieben ein Verbringen des Wulstes in das Tiefbett der Felge gegen den Widerstand der weiteren Aufspannbacken 25 durchzuführen.

Die kontinuierlich nach außen ansteigende schräge Fläche 26 endet im Gegenlager 7, nimmt dort das Felgenhorn auf. Das Gegenlager 7 geht mit einer abgerundeten Form 16 über in die radiale Außenseite 15 der Aufspannbacke 2. Diese abgerundete Form 16 dient nunmehr als ausgezeichnetes Widerlager für das in das Felgenbett drücken des Reifens und zwar unabhängig davon, ob es sich um eine glatte Felge oder um eine Felge mit zusätzlichen Bauteilen handelt.

In Figur 4 ist eine Aufspannbacke 2 dargestellt. bei der eine zusätzliche Gleithilfe 27 mit der Spannbacke 2 verbunden ist, die jedoch im Bereich des Gegenlagers 7 endet. Hierdurch wird insbesondere bei Verwendung von Gummi oder Kunststoff ein Verschleiß der Gleithilfe und eine Beschädigung der Felge durch das Anpressen des Gegenlagers 7 an das Felgenhorn vermieden. Die Gleithilfe 7 liegt an einer Schulter 28 an der Aufspannbacke 2 an. so daß der Gleitvorgang stufenlos auch im Bereich des Gegenlagers 7 erfolgen kann. Auch beim Entspannen der Felge kann somit die Gleithilfe 27 nicht abgerissen werden.

Im Falle der in Figur 3 dargestellten Schwalbenschwanzführung der Aufspannbacke 2, die eine Breite 29 besitzt, wird die Spannbacke 2 über eine Aufnahme 50, in der sowohl der Stift 23 angeordnet ist, als auch die Schraube 24 mit einem nicht dargestellten Antriebsaggregat verbunden, um die Felge spannen zu können.

## Patentansprüche

1. Aufspannbacke für ein Reifenmontiergerät mit einem Gegenlager einer nach aussen kontinuierlich ansteigenden Fläche und einem Aufspanntisch (1) für ein Felgenhorn (12) einer Felge (3) eines Kraftfahrzeugrades, auf die ein Reifen (10) montiert oder demontiert werden soll, und einer Halterung für die Aufspannbacke, dadurch gekennzeichnet, dass die Aufspannbacke (2) in ihrer dem Aufspanntisch (1) zuweisenden Seite (Fussebene) einen Stift (23) und eine Bohrung für eine Halteschraube (24) besitzt, dass zwischen Stift (23) und Halteschraube (24) eine Ausnehmung (20) für eine andere Aufspannbacke (25) vorhanden ist und dass die dem Rad zuweisende Seite der Aufspannbacke (2) als nach aussen kontinuierlich ansteigende Fläche (26) ausgestaltet ist, mit an derem äusseren oberen Ende ohne Übergang angeordnetem Gegenlager (7) für das Felgenhorn (12) einer mit einem Reifen (10) zu montierenden oder demontierenden Felge (14).

2. Aufspannbacke nach Anspruch 1, dadurch gekennzeichnet, dass die dem Rad zuweisende Seite der Aufspannbacke (2) als nach aussen ansteigende schiefe Ebene (26) ausgestaltet ist.

3. Aufspannbacke nach einem oder mehreren der vorhergehenden Ansprüche, dadurch gekennzeichnet, dass die Aufspannbacke (2) auf der dem Rad zuweisenden Seite mit einer Gleithilfe (27) bestückt ist.

4. Aufspannbacke nach einem oder mehreren der vorhergehenden Ansprüche, dadurch gekennzeichnet, dass die Aufspannbacke einstückig hergestellt wird.

5. Aufspannbacke nach einem oder mehreren der Ansprüche 1–3, dadurch gekennzeichnet, dass die Aufspannbacke durch Schweissen hergestellt ist.

6. Aufspannbacke nach einem oder mehreren der vorhergehenden Ansprüche, dadurch gekennzeichnet, dass die Aufspannbacke (2) im Bereich ihrer Fussebene (17) schwalbenschwanzförmig (18) ausgebildet ist.

7. Verwendung der Aufspannbacke (2) nach einem oder mehreren der vorhergehenden Ansprüche, dadurch gekennzeichnet, dass auf dem Aufspanntisch (1) des Reifenmontiergeräts mindestens drei Aufspannbacken (2) mittels zentralem Vortrieb beim Festspannen der Felge (3) auf das Felgenhorn (6) des Rades zubewegt werden.

8. Verwendung nach Anspruch 7, dadurch gekennzeichnet, dass der Aufspanntisch (1) Schlitzführungen (9) für Aufspannbacken (2) trägt.

## Claims

1. A clamping jaw for tyre mounting equipment with an abutment of a surface which rizes continuously outwardly and a clamping table (1) for a wheel flange (12) of a rim (3) of a motor vehicle onto which a tyre (10) is to be mounted or from which a tyre is to be demounted and of a holder for the clamping jaw, characterized in that the clamping jaw (2) has, on its side (base plane) facing the clamping table (1), a pin (23) and a bore for a clamping bolt (24). in that between pin (23) and holding bolt (24) there is a recess (20) for another clamping jaw (25) and in that the side of the clamping jaw (2), which side faces the wheel, is shaped as a surface (26) continuously rising outwardly, with abutment (7) for the wheel flange (12) of a rim (14) to which is to be mounted or from which is to be demounted a tyre (10). which abutment is arranged on its upper end without transition.

2. A clamping jaw according to Claim 1, characterized in that the side of the clamping jaw (2) facing the wheel in shaped as an inclined plane rising outwardly.

3. A clamping jaw according to one or more of the preceding Claims. characterized in that the clamping jaw (2) is provided with a sliding help (27) on the side facing the wheel.

4. A clamping jaw according to one or more of preceding Claims. characterized in that the clamping jaw is made in one piece.

5. A clamping jaw according to one or more of the Claims 1–3. characterized in that the clamping jaw is made by welding.

6. A clamping jaw according to one or more of the preceding Claims, characterized in that the clamping jaw (2) is made dove-tailed in shape in the region of its base plane (17).

7. Use of the clamping jaw (2) according to one or more of the preceding Claims, characterized in that on the clamping table (1) of the tyre mounting equipment at least three clamping jaws (2) are moved forwards by means of a central advance on clamping the rim (3) on the wheel flange (6).

8. Use according to Claim 7, characterized in that the clamping table (1) has slit guides (9) for clamping jaws (2).

## Revendications

1. Mors de bridage pour un appareil à monter les pneumatiques, comportant une butée, une surface s'élevant en continu vers l'extérieur, et un plateau de fixation (1) pour le rebord (12) d'une jante (3) d'une roue de véhicule sur laquelle on doit monter ou démonter un pneumatique (10), et und fixation pour le mors de bridage, caractérisé en ce que le mors de bridage (2) comporte dans son côté (base du pied) orienté vers le plateau de fixation (1), un goujon (23) et un alésage pour une vis de fixation (24), en ce qu'on prévoit entre le goujon (23) et la vis de fixation (24) un évidement (20) pour un autre mors de bridage (25), et en ce que le côté du mors de bridage (2) tourné vers la roue, est réalisé sous forme d'une surface (26) s'élevant en continu vers l'extérieur, avec sur son extrémité supérieure extérieure, une butée (7) pour le rebord (12) d'une jante (3) sur laquelle on doit monter un pneu (10) ou dont on doit le démonter.

2. Mors de bridage selon la revendication 1. caractérisé en ce que le côté du mors de bridage (2) tourné vers la roue, est réalisé sous forme de plan oblique (26) s'élevant vers l'extérieur.

3. Mors de bridage selon l'une ou plusieurs des revendications précédentes, caratérisé en ce que le mors de bridage (2) est pourvu, sur le côté tourné vers la roue, d'un élément auxiliaire de glissement (27).

4. Mors de bridage selon l'une ou plusieurs des revendications précédentes, caractérisé en ce que le mors de bridage est fabriqué d'une seule pièce.

5. Mors de bridage selon l'une ou plusieurs des revendications 1 à 3. caractérisé en ce que le mors de bridage est fabriqué par soudure.

6. Mors de bridage selon l'une ou plusieurs des revendications précédentes. caractérisé en ce que. dans la zone de sa base de pied (17) le mors de bridage (2) est réalisé en forme de queue d'arronde (18).

7. Utilisation du mors de bridage (2) selon l'une ou plusieurs des revendications précédentes, caractérisé en ce que, sur le plateau de fixation (1) de l'appareil à monter les pneumatiques, au moins trois mors de bridage (2) sont déplacés en direction du rebord de jante (6) de la roue au moyen d'un mécanisme d'avance central, lors de la fixation de la jante (3).

8. Utilisation selon la revendication 7, caractérisé en ce que le plateau de fixation (1) comporte des gquidages en forme de rainures (9) pour les mors de bridage (2).

Fig. 1

Fig. 2

0169255

Fig. 3

Fig. 4